# DEMANDE DE BREVET EUROPEEN

(11) **EP 2 487 898 A1**
(43) Date de publication de la demande: **15.08.2012**
(21) Numéro de dépôt: 12154749.1
(22) Date de dépôt: 09.02.2012
(51) Int. Cl.: H04N 5/445

(54) **Procédé d'affichage d'une mosaïque vidéo personnalisée et réceptacle audiovisuel correspondant**

(30) Priorité: 11.02.2011 FR 1151141
(71) Demandeur: HTTV, 38240 Meylan (FR)
(72) Inventeur: Bampuis, Olivier, 38000 Grenoble (FR)
(74) Mandataire: Prugneau, Philippe

(57) **Abrégé**

Un procédé d'affichage d'une mosaïque vidéo personnalisée à un utilisateur au niveau d'un récepteur audiovisuel, comporte les étapes suivantes :
- réception d'un flux audiovisuel transportant une mosaïque vidéo source qui est diffusée, cette mosaïque vidéo diffusée étant constituée d'une agrégation de flux vidéos encodés chacun au format vignette et correspondant chacun à une chaîne d'un programme audiovisuel,
- décodage (32) du flux audiovisuel pour obtenir une image vidéo fixe de la mosaïque diffusée,
- capture (320) d'au moins une vignette dans l'image vidéo fixe à partir de données de personnalisation et agrégation de chaque vignette dans une image matricielle à travers une chaîne de filtres de rendu graphique pour composer une image matricielle correspondant à la mosaïque personnalisée,
- transformation (36) de l'image matricielle dans un filtre mélangeur pour produire une image vidéo fixe composite de la mosaïque personnalisée, et
- affichage de l'image vidéo fixe de la mosaïque personnalisée au niveau du récepteur.

## Description

L'invention concerne un procédé d'affichage d'une mosaïque vidéo personnalisée à un utilisateur au sein d'un récepteur audiovisuel et un récepteur audiovisuel mettant en oeuvre un tel procédé.

Le document de brevet FR-2902568 décrit un procédé d'affichage d'une image mosaïque personnalisée à un utilisateur dans lequel des images de différents programmes diffusés sont agrégées au niveau du récepteur à l'aide d'un programme de gestion d'écran qui détermine la position des images des programme au sein de l'image mosaïque. Ce document décrit aussi une agrégation au sein du récepteur de plusieurs flux vidéo dégradés produits par un serveur pour former une mosaïque de flux vidéo.

De nos jours, un réseau de diffusion numérique transmet des programmes audiovisuels destinés à être visualisés sur des récepteurs audiovisuels, et des informations de service permettant notamment de sélectionner les programmes, par exemple à l'aide d'un Guide Electronique de Programmes. Un tel diffuseur peut aussi émettre une mosaïque vidéo composée de plusieurs flux vidéo (correspondant chacun à un programme) agrégés respectivement dans des petites images ou « vignettes», chaque flux vidéo se diffusant à l'intérieur d'une vignette de la mosaïque vidéo et chaque vignette identifiant graphiquement un programme actuellement diffusé pour sa sélection individuel afin d'être afficher en plein écran. Le contenu visuel d'une vignette dans la mosaïque vidéo correspond donc à un programme actuellement diffusé par le réseau mais avec une taille d'image réduite. La mosaïque vidéo source est construite en tête de réseau puis est diffusée comme une chaîne standard. Son contenu est donc identique pour tous les utilisateurs.

L'application au sein du récepteur audiovisuel détecte la réception d'une mosaïque vidéo et l'affiche sur l'écran. L'utilisateur sélectionne une vignette en déplaçant un curseur à l'aide de touches de direction d'une télécommande ce qui a pour effet de mettre en évidence la vignette (en faisant apparaître un cadre, ou en lui appliquant une surbrillance, ou encore en la faisant clignoter). Puis l'utilisateur appuie sur la touche d'activation (touche généralement appelée touche « OK ») de la télécommande, l'application sélectionne les paramètres de diffusion du programme associée à cette vignette. En particulier, avec ces paramètres, l'application programme le démodulateur et/ou le filtre du récepteur audiovisuel pour extraire les signaux du programme sélectionné et les afficher sur l'écran.

La mosaïque vidéo étant conçue au niveau du réseau de diffusion, le récepteur peut l'afficher immédiatement sans avoir besoin de lui faire subir de traitement particulier. Tous les récepteurs audiovisuels reçoivent la même mosaïque vidéo. Il n'est donc pas possible de personnaliser cette mosaïque vidéo en fonction par exemple des préférences de l'utilisateur. Le diffuseur envoie une mosaïque vidéo d'un ensemble de programmes diffusés selon un ordre déterminé par lui. Au niveau du récepteur, l'application ne peut pas paramétrer d'elle-même l'affichage selon les voeux de l'utilisateur. La mosaïque vidéo comporte donc des vignettes de tous les programmes diffusés, y compris ceux que l'utilisateur ne sélectionne jamais et dans un ordre qui a peu de chance d'être celui de ses préférences.

Il existe d'autres moyens pour présenter une mosaïque vidéo à des utilisateurs. Par exemple les flux vidéo des chaînes peuvent être diffusés individuellement en format vignette et agrégés au niveau du récepteur mais ceci implique un récepteur possédant d'énormes capacités de décodage. Les flux vidéos peuvent être mis à l'échelle vignette dans le récepteur et agrégés dans une mosaïque mais ceci n'est possible que pour des chaines appartement à un même flux de transport. On connaît ainsi du document de brevet US-2010/171881 une méthode pour générer une mosaïque vidéo à partir de plusieurs flux audio/vidéo selon laquelle les flux sous échantillonnés sont agrégés dans la mosaïque en utilisant une application graphique dans le récepteur de l'utilisateur.

La présente invention propose une nouvelle interface utilisateur permettant de créer de façon dynamique et d'afficher une mosaïque vidéo personnalisée en fonction des choix de l'utilisateur au niveau d'un récepteur à partir de la réception d'un flux audiovisuel unique transportant une mosaïque vidéo source.

L'invention a donc pour objet un procédé d'affichage d'une mosaïque vidéo personnalisée à un utilisateur au niveau d'un récepteur audiovisuel, comportant les étapes suivantes :
- réception d'un flux audiovisuel transportant une mosaïque vidéo source qui est diffusée, cette mosaïque vidéo diffusée étant constituée d'une agrégation de flux vidéos encodés chacun au format vignette et correspondant chacun à une chaîne d'un programme audiovisuel,
- décodage du flux audiovisuel pour obtenir une image vidéo fixe de la mosaïque diffusée,
- capture d'au moins une vignette dans l'image vidéo fixe à partir de données de personnalisation et agrégation de chaque vignette dans une image matricielle à travers une chaîne de filtres de rendu graphique pour composer une image matricielle correspondant à la mosaïque personnalisée,
- transformation de l'image matricielle dans un filtre mélangeur pour produire une image vidéo fixe composite de la mosaïque personnalisée
- affichage de l'image vidéo fixe de la mosaïque personnalisée au niveau du récepteur.

L'invention s'étend à un récepteur audiovisuel mettant en oeuvre un tel procédé d'affichage.

Le procédé d'affichage et le récepteur audiovisuel selon l'invention sont décrits plus en détail en relations avec les dessins.

La figure 1 représente très schématiquement un récepteur audiovisuel selon l'invention.

La figure 2 illustre de façon schématique une apparence écran d'une mosaïque vidéo.

La figure 3 est un schéma fonctionnel de principe d'une chaîne de décodage standard d'un flux audiovisuel.

La figure 4 est un schéma fonctionnel plus détaillé des traitements d'image selon l'invention dans cette chaîne de décodage.

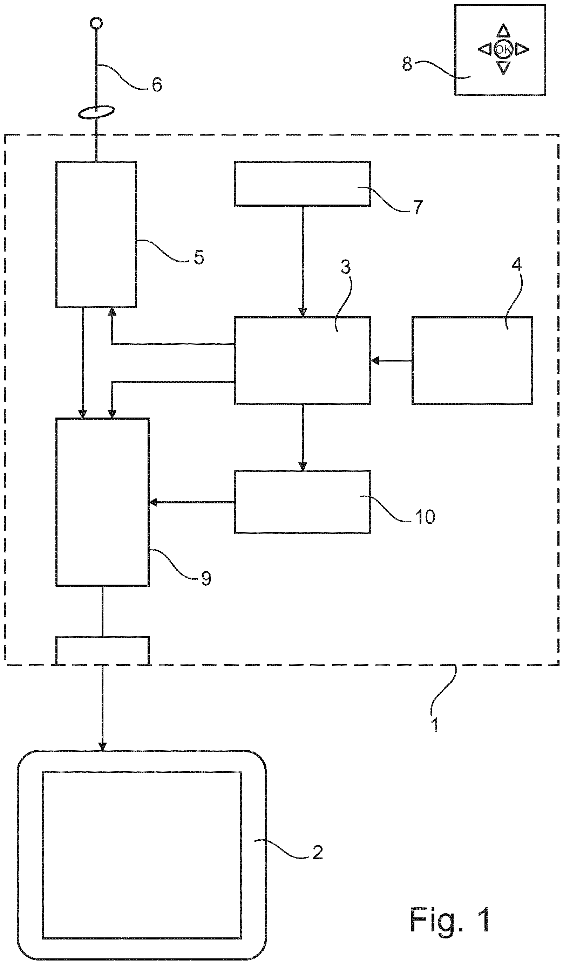

A l'aide la figure 1, on décrit d'abord le fonctionnement d'un récepteur audiovisuel 1 connecté à un dispositif d'affichage ou écran 2 selon l'invention. Le récepteur audiovisuel 1, par exemple un décodeur appelé en anglais « set top box » comprend une unité centrale 3 reliée à une mémoire de programmes et de données 4, des moyens de réception tels qu'un démodulateur et un démultiplexeur 5 pour recevoir des signaux audio/vidéo d'un réseau de diffusion à travers une antenne de réception 6.

Le récepteur 1 est ici préférentiellement de type numérique et reçoit des services audiovisuels numériques.

L'unité centrale 3 doit posséder une puissance de traitement suffisante pour réaliser des transformations et des recompositions d'images à la cadence du flux vidéo.

Le récepteur 1 comprend en outre une interface de signaux infrarouge 7 reliée à l'unité centrale 3 pour recevoir des signaux d'une télécommande 8. La télécommande 8 est dotée des touches de direction : et la touche « OK » dont l'utilisation est bien connue.

Le récepteur 1 comprend également un circuit 9 pour l'affichage direct des émissions audiovisuelles reçues à travers l'antenne 6 et un circuit 10 d'incrustation de données, appelé souvent circuit OSD de l'anglais « On Sceen Display ».

Le circuit 10 est un générateur de texte et de graphisme qui permet d'afficher à l'écran des menus, des pictogrammes (par exemple un numéro correspondant à la chaîne visualisée) et des images pixellisées conformément à la présente invention.

Le réseau (terrestre, satellite ou câble ou encore internet) diffuse donc des programmes audiovisuels plus communément appelés « services » et des données destinées à les référencer ou métadonnées. Ces données, définies par exemple dans les spécifications DVB-SI, se présentent sous la forme de tables et de descripteurs qui décrivent les objets émis sur le réseau de diffusion. Dans le cadre de l'invention, le réseau diffuse sur un canal un flux audiovisuel transportant une mosaïque vidéo originale source.

Cette mosaïque vidéo diffusée est constituée d'une agrégation de flux vidéos encodés en tête de réseau chacun au format vignette et correspondant à une chaîne d'un programme audiovisuel diffusé par le réseau. Les métadonnées de description de la mosaïque vidéo décrivent la liste des vignettes, leur position et taille respective dans la mosaïque. La mosaïque vidéo source peut contenir un très grand nombre de vignettes. Cette mosaïque vidéo peut être affichée sur l'écran 2 dans un format haute définition (1920x1080 pixels) mais une définition moindre ne sort pas du cadre de l'invention. La qualité d'image des vignettes peut être fonction du nombre de vignettes présentes dans la mosaïque vidéo. Par exemple, en haute définition, la mosaïque vidéo pourra contenir jusqu'à 117 vignettes ayant chacune une résolution de 144x155 pixels. Le flux audio de la mosaïque peut être transcodé avec un débit plus faible pour réduire la bande passante nécessaire.

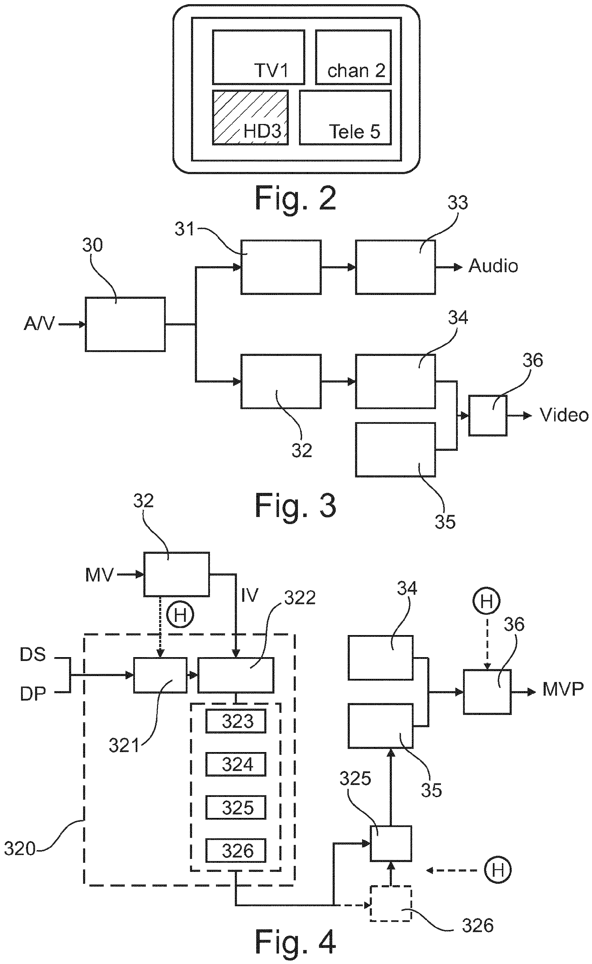

La figure 2 montre une apparence d'écran affichant une mosaïque vidéo source avec ici seulement quatre vignettes respectivement associées aux canaux « TV1 », « Chan 2 », « HD3 », « Tele5 ». La vignette indiquée par « HD3 » est ici mise en évidence par le curseur.

Selon l'invention, il est prévu une logique (sous la forme d'un programme exécutable par l'unité centrale 3) dans le récepteur 1 pour qu'à partir de cette mosaïque vidéo source, une mosaïque vidéo personnalisée à un utilisateur soit construite de façon dynamique et affichée sur l'écran 2 à la place de la mosaïque vidéo originale source.

La figure 3 est un schéma fonctionnel simplifié d'une chaîne de décodage et d'affichage classique dans le récepteur 1 d'un flux audio/vidéo A/V reçu sur l'antenne 6, le cas échéant un flux audio/vidéo transportant une mosaïque vidéo originale.

Le flux A/V est démultiplexé en 30 et les deux flux audio et vidéo démultipléxés sont décodés respectivement dans un décodeur audio 31 et un décodeur vidéo 32. Le décodeur audio 31 produit un échantillon numérique audio qui est transformé dans un filtre de rendu audio 33 avant d'être joué dans le récepteur 1. Le décodeur vidéo 32 produit une image vidéo fixe qui peut être transformée et recomposée à travers des filtres de rendu vidéo et graphique 34 et 35 et un filtre de mélange 36 avant d'être affichée sur l'écran 2 du récepteur.

La recomposition graphique d'une mosaïque vidéo personnalisée à un utilisateur selon l'invention s'insère dans cette chaîne fonctionnelle de décodage plus particulièrement entre le décodeur 32 et le filtre de rendu graphique 35 comme illustré sur la figure 4.

La figure 4 est donc un schéma fonctionnel détaillé de la chaîne de traitements graphiques selon l'invention pour l'affichage d'une mosaïque vidéo personnalisée à un utilisateur.

Cette chaîne de traitements graphiques exploite en entrée les images vidéo fixes décodées dans le flux audiovisuel transportant la mosaïque vidéo source. Cette chaîne de traitement graphiques a pour fonction de capturer dans chaque image vidéo fixe de la mosaïque source des vignettes prédéterminées et d'agréger chaque vignette dans une image matricielle de fonds d'écran à travers une chaîne de filtres de pixellisation et de transformation pour rendu graphique pour composer une image matricielle composite correspondant à la mosaïque personnalisée à l'utilisateur avant de recomposer cette image au format vidéo dans un filtre mélangeur pour son affichage sur l'écran 2.

Plus particulièrement, sur la figure 4, DS désigne les métadonnées de description de la mosaïque vidéo source et DP désigne des données de personnalisation de l'utilisateur.

Les métadonnées de description DS de la mosaïque vidéo source identifient chacun des flux vidéo entrant dans la mosaïque source et décrivent la composition de la vignette dans la mosaïque (triplets DVB de la chaîne plein écran - Position dans la mosaïque HD (X,Y, Hauteur, Largeur), proportion de la vignette, liste des pistes audio associées, etc...). Ces métadonnées sont transmises par exemple comme données privées dans la PMT du service.

Les données de personnalisation DP peuvent être entrées préalablement, par exemple par l'utilisateur final à l'aide de la télécommande 8 et d'un programme de configuration interactif de la mosaïque personnalisée stockée dans la mémoire 4. Les données de personnalisation décrivent le contenu de la mosaïque personnalisée à l'utilisateur, c'est-à-dire définissent la liste de vignettes ou chaînes audiovisuelles de la mosaïque vidéo personnalisée ainsi que la disposition et la taille de ces vignettes sur l'écran d'affichage 2.

Sur la figure 4, MV désigne le flux vidéo démultipléxé dans lequel est encodée la mosaïque vidéo source qui est diffusée en parallèle avec les métadonnées de description DS.

Le décodeur 32 produit donc une image vidéo fixe IV de la mosaïque vidéo source à une certaine cadence, par exemple 25, 30, 50 ou 60 images par seconde selon la nature de la source vidéo. H désigne un signal d'horloge qui est extrait du décodeur 32 et qui correspond à cette cadence de décodage à 25,30,50 ou 60 Hertz.

Ce qui suit correspond donc au processus d'affichage 320 selon l'invention d'une image vidéo de la mosaïque vidéo personnalisée, ce processus se répétant à la cadence H pour les images vidéo successives de la mosaïque vidéo source.

Le processus d'affichage 320 réside dans une chaîne de filtres de pixellisation et de transformation à la volée de vignettes vidéo fixe capturées individuellement dans l'image vidéo fixe IV produite par le décodeur 32.

Un filtre de pilotage vidéo 321 exploite les métadonnées de description DS et les données de personnalisation DP pour commander le module 322 qui capture chaque vignette dans l'image vidéo fixe IV. Ensuite chaque vignette capturée est agrégée dans une image matricielle de fonds d'écran après un passage dans différents filtres de transformation incluant : changement en 323 du codage des couleurs dans la vignette «(« color conversion »), mise à l'échelle en 324 de la taille de la vignette (« resizing »), amélioration en 325 de la qualité de la vignette (« filtering »), transfert par blocs de pixels en 326 dans une image matricielle de fonds (« BIT blit »).

Ces traitements 322 à 326 sont répétés pour chaque vignette capturée en fonction des données de personnalisation.

A l'issue de ces traitements en boucle, une image matricielle constituée d'une agrégation de vignettes pixellisées qui est personnalisée à l'utilisateur est stockée dans une mémoire tampon, ici une double mémoire tampon 325,326 à fonctionnement alterné (pour éviter les effets de clignotement (« screen tearing ») pour être récupérée par le filtre de rendu graphique 35 avant d'être transformée en une image vidéo fixe composite MVP dans le filtre mélangeur 36 pour son affichage à l'écran 2.

Le filtre mélangeur 36 et la double mémoire tampon 325,326 sont également cadencés par l'horloge H de sorte que si la construction de l'image vidéo fixe de la mosaïque personnalisée n'est pas achevée à une fin de période de l'horloge H, à l'écran l'unité centrale 3 affiche deux fois la même image vidéo fixe courante sur l'écran 2.

L'invention est applicable à différents modes de diffusion : satellite, câble, terrestre ou encore internet. L'invention est aussi applicable à une mosaïque vidéo source et à une mosaïque personnalisée s'affichant sur plusieurs pages écran.

Avec l'invention, l'utilisateur peut donc sélectionner les vignettes des canaux et choisir leur emplacement sur l'écran d'affichage. Cette mosaïque vidéo personnalisée reste bien entendu interactive comme la mosaïque source avec la télécommande 8 du récepteur 1.

L'utilisateur peut être un téléspectateur final ou un opérateur intermédiaire entre la tête de réseau et le téléspectateur final. La composition de la mosaïque personnalisée peut donc être pilotée par un opérateur pour constituer une mosaïque vidéo thématique, événementielle ou pour d'autres types de regroupement. La transformation de la mosaïque vidéo source en une mosaïque vidéo personnalisée selon l'invention consomme peu de bande passante, est applicable sur un décodeur standard et n'implique pas de coûts supplémentaires au niveau de l'infrastructure du diffuseur.

Le processus de construction et d'affichage 320 de la mosaïque personnalisée selon l'invention peut être implémenté sous la forme d'un programme d'application interface dans la mémoire 4.

## Revendications

1. Procédé d'affichage d'une mosaïque vidéo personnalisée à un utilisateur au niveau d'un récepteur audiovisuel (1), comportant les étapes suivantes :
- réception d'un flux audiovisuel transportant une mosaïque vidéo source qui est diffusée, cette mosaïque vidéo diffusée étant constituée d'une agrégation de flux vidéos encodés chacun au format vignette et correspondant chacun à une chaîne d'un programme audiovisuel,
- décodage (32) du flux audiovisuel pour obtenir une image vidéo fixe de la mosaïque diffusée,
- capture (320) d'au moins une vignette dans l'image vidéo fixe à partir de données de personnalisation et agrégation de chaque vignette dans une image matricielle à travers une chaîne de filtres de rendu graphique pour composer une image matricielle correspondant à la mosaïque personnalisée,
- transformation (36) de l'image matricielle dans un filtre mélangeur pour produire une image vidéo fixe composite de la mosaïque personnalisée, et
- affichage de l'image vidéo fixe de la mosaïque personnalisée au niveau du récepteur.

2. Procédé selon la revendication 1, dans lequel le mode de diffusion de la mosaïque source est un mode satellite.

3. Procédé selon la revendication 1, dans lequel le mode de diffusion de la mosaïque source est un mode terrestre.

4. Procédé selon la revendication 1, dans lequel le mode de diffusion de la mosaïque source est un mode internet.

5. Récepteur audiovisuel, **caractérisé en ce qu'**il comprend une unité centrale (3) et une mémoire de programme (4) spécialement adaptés pour mettre en oeuvre le procédé selon l'une des revendications 1 à 4.
